# EUROPEAN PATENT SPECIFICATION

(11) **EP 0 485 437 B1**
(45) Date of publication and mention of the grant of the patent: **01.03.1995**
(21) Application number: 90911555.2
(22) Date of filing: 31.07.1990
(51) Int. Cl.: F16L 37/00, F16L 37/08

(54) **Abdichtungsvorrichtung für eine unter Druck stehende Leitung**
Sealing device for a pressure confining piping system
Equipement d'étanchéité pour conduite sous pression

(30) Priority: 02.08.1989 US 388507
(43) Date of publication of application: 20.05.1992
(73) Proprietor: PROPRIETARY TECHNOLOGY, INC., Southfield, MI 48037 (US)
(72) Inventor: BARTHOLOMEW, Donald, D., Unit 32C Mount Clemens, MI 48045 (US)
(74) Representative: Harwardt, Günther, Dipl.-Ing.
(86) International application number: PCT/US90/04266
(87) International publication number: WO 91/02187

(56) References cited:
- US-A- 3 400 954
- US-A- 4 743 051
- US-A- 4 749 214

## Description

The invention concerns a sealing device for a pressure-confining piping system and which may be used when pipe ends are non-aligned and/or at different separations, said sealing device comprising a housing providing a bore, a ring within said housing and having an outer diameter less than the diameter of said bore, a U-shaped cup-type seal wholly within said housing, the seal having first and second legs with a flexing portion between the legs, one leg being longer than the other leg and said first leg being larger in diameter than the second leg, said first leg being in sealing engagement with the housing, and means within the housing to engage the first leg to position the seal therein.

US-A-3,400,954 describes a pipe coupling for connecting together substantially axially aligned end portions of pipes which may be of slightly different diameters, or slightly out of round or tapered. The coupling comprises a cylindrical body having a U-shaped sealing gasket at each end. One of the legs of each gasket sealing engages both the body and an insested tube.

The coupling body may be flexible to allow for axial deviations in a pipe line which has been laid using the couplings but it is clear that for assembly of a coupling to two pipes the pipes have to be substantially axially aligned.

In one embodiment the outer leg of the seal engages both the body and the pipe and there is some clearence between the inner leg of the seal and the outer surface of the inserted pipe which would allow for a small misalignment of the pipe and the body.

The use of only one limb of each sealing gasket to seal both to the body and the inserted pipe limits the applicability of the coupling which is not designed to be used in a piping system in which the pipes, before being coupled, are substantially misaligned.

It is an object of the invention to provide a simple sealing device for use in a pressure-confining piping system and which operates even where pipe ends are substantially out of alignment and/or are at different separations.

According to the invention we provide a sealing device for a pressure-confining piping system and which may be used when pipe ends are non-aligned and/or at different separations, said sealing device comprising a housing providing a bore, a ring within said housing and having an outer diameter less than the diameter of said bore, a U-shaped cup-type seal wholly within said housing, the seal having first and second legs with a flexing portion between the legs, one leg being longer than the other leg and said first leg being larger in diameter than the second leg, said first leg being in sealing engagement with the housing, and means within the housing to engage the first leg to position the seal therein: characterised
in that said second leg is adapted to receive a pipe end and is easily distortable to conform to the surface of the pipe when the pipe end enters the seal at an angle to the longitudinal axis of the housing greater than zero;
in that the ring supports the flexing portion of the seal;
in that the ring is free to move transversely within the housing relative to said longitudinal axis when engaged by a pipe end entering said second leg;
in that the ring provides a guide to be engaged by a pipe end entering the seal; and
in that an end closure is provided on the housing to retain the ring and the seal within the housing while permitting said ring to move transversely within the housing relative to said longitudinal axis, the ring being interposed between said flexing portion and said end closure.

In the sealing device of the invention the leg of the seal of larger diameter engages the housing and the leg of smaller diameter engages the inserted pipe thus allowing for pipe misalignment.
The ring serves to support the flexing part of the seal between the legs thereof, acts as a guide for an iserted pipe end and moves transversely in the housing to allow for pipe misalignment.

Advantages of the invention are:-
it provides a connecting means which will accommodate the normal variations of a rigid pipe;
it will allow the movements that are necessary for installation and removal of a rigid pipe;
it is less sensitive than the prior art to operator or assembler error;
it may be incorporated in the end of a rigid pipe, or as a port in a device, or used as a union for connecting of two pipe ends;
it enables a system cost reduction by substituting a piece of rigid pipe for a more expensive flexible hose;
a superior rubber, that is more expensive, may be used for the seal because of the small amount that is used relative to the cost of a flexible hose; and
it provides increased service life when compared to the service life of a flexible hose.

A preferred sealing device according to the invention is shown in the drawings.
Figure 1 is a cross-sectional view of a sealing device constituting a first embodiment of the invention for joining two pipe ends together;
Figure 2 is a side elevation, partly in section, of a sealing device constituting a second embodiment of the invention; and
Figures 2A and 2B are exploded perspective views of the pipe retainer forming part of the embodiment of Figure 2.

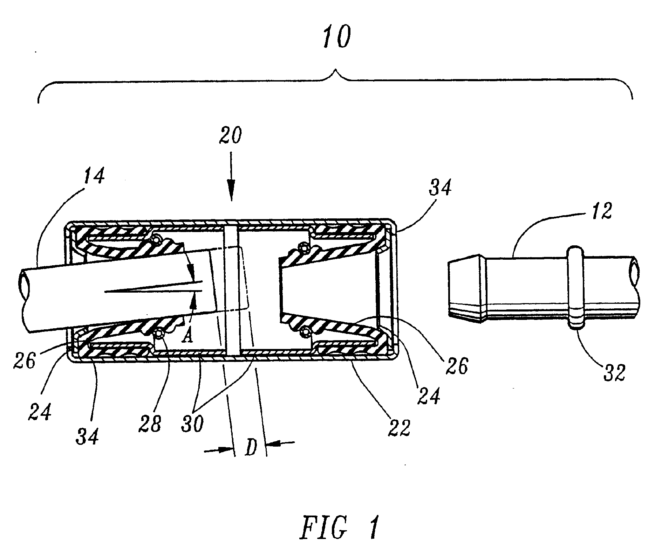

Referring now to figure 1, a union employing the sealing device disclosed and two male pipe ends are shown as 10. The union 20 is for sealingly connecting pipe portion 12 to pipe portion 14.

The union 20 consists of a housing 22 providing a bore which contains a movable retainer-guide ring 24, seal 26, seal compression assisting means 30 which acts to maintain the position of seal 26 in the interior of housing 22 when pipe portions 12 and 14 are inserted into union 20.

The various elements 22 through 30 are designed so as to provide accommodation of off-axis angle "A" and enable in-and-out movement "D" as shown for pipe portion 14 while sealing with the pipe portion.

The movable retainer-guide ring 24 has an outside diameter that is smaller than the diameter of the bore of the housing 22. This allows ring 24 to be moved transversely off the centre line axis of the union 20 to accommodate a nonaligned pipe portion such as 14. Ring 24 also has an inward taper lead portion that assists the mounting of union 20 to a pipe portion such as 14 and acts as a rigid backing for a flexing portion of seal 26. Ring 24 thus has a multi-function.

Seal 26 is a special shape of what is broadly categorized as "U"-cup type seals. The elongated inner leg of the seal 26 allows accommodation of off-axis angles "A" of pipe ends, and the design also easily accommodates the flexing that is required as a non-on-axis condition like that shown where pipe portion 14 enters union 20 and the movable retainer-guide ring 24 is displaced transversely from the longitudinal axis of the union to accommodate incoming pipe portion 14. The normal practice of disposing annular rings about sealing surfaces to concentrate the hydrostatic forces that act on the inner (wet) surfaces of the seal legs ("U"-legs) may be employed where helpful. Seal compression means 28 in the form of a garter spring is shown in Figure 1 on the outside of the inner leg of the seal 26.

The seal compression means 28 is used for two main functions. The first function is to add hoop strenght to seal 26 so that the accommodation, and resulting distortion of seal 26 due to off-axis pipe conditions are reliably met for a long service life. The second main function is to provide a more positive non-blow-off grip of union 20 to any bead or barb on a pipe end, such as is shown on the end of pipe portion 12. Forces that would make union 20 go further on the male end being connected are resisted by the standard hose stop bead 32.

Spacer 30 serves the purpose of maintaining the position of the outer larger diameter leg of the seal 26. In the case of a union, two of these spacers may be used to assure that the two seals remain in position. There are a number of different means by which spacers 30 may accomplish this function, it is only necessary that seal movement inward be prevented in some manner. The important feature of the spacer is that it is of such design as to apply positioning force to seal 26 near the smaller diameter leg of the seal that accepts the pipe end being connected, this ensures that the distortion in seal 26 that is required in off-axis situations takes place in the desired manner.

As an example of how the union 20 might be used, consider a water cooling pipe on an engine that presently consists of a screw-in nipple adaptor, a length of hose with two clamps, a run of rigid pipe, with a length of hose (and two clamps) to connect to a cast fixed hose nipple on a device that is bolted to the engine. There are tolerances probably as much as + 6,4 mm (1/4) inch in all directions when one considers the tolerances in casting, bolting and threading in of the nipple adapter. Add to those tolerances the normal variations in pipe bending angles and lengths, and it is immediately clear why the flexible hose sections are required.

In this case the first nipple fitting and hose with its two clamps are replaced by a thread in quick connector of the type that uses a pin outward bead near the pipe end to lock the pipe in place. Later for further cost savings, the port that the nipple threads into can become the female housing for the quick connector, so that it is only necessary to snap the quick connector internal parts into the port. For maximum accommodation of off-axis pipe to port mismatch, the quick connector could also use the internal components of one end of union 20. At the other end of this example, union 20 would be installed over the cast on male hose nipple. The pipe communicating the quick connector and union 20 would still be smooth on the exterior for sealing, but would not have the customary two beads at the union end, and only one bead at the quick connector end.

The pipe would first be inserted in the union, and pushed into the union a distance sufficient to clear entry of the other pipe end into the quick connector. The entire pipe would be moved toward the quick connector as the quick connector end is installed and snapped into place.

Note the labor costs:
a) If a screw in quick connector is used the cost is the same as screwing in the hose nipple. If the screw port were converted to a quick connect female port, this cost would be about the same as installing the quick connector internal parts.
b) At the opposite end, pushing the union onto the nipple would be about the same as pushing a length of hose onto the nipple.
c) The pipe is merely pushed into the union, then by reversing the motion snapped into the quick connector. This is much less involved than pushing the pipe into a hose at one end and trying to get the pipe into a hose at the other end.
d) With the new method, assembly is complete. With the old method four hose clamps must be positioned and torqued to the proper setting. Add to this that often you can hardly get to one or more of the clamps and you begin to appreciate the savings in cost and the improved reliability.

Now note the material costs:
a) The thread-in quick connector will cost about as much as the thread-in hose nipple, plus two hose clamps. Later the cost may be further reduced by making the screw-in port a quick connector female port.
   Savings-most of the cost of the hose, extending the length of the rigid pipe is trivial when compared to the hose cost.
b) At the other end the union probably will cost about the same as a short piece of hose plus the two hose clamps, again extending the rigid pipe is trivial against hose cost.
c) Three beads on the pipe are saved.

Results:

Some savings in material, a large savings in labor costs and a definite improvement of first time reliability and a longer safer service life.

The accommodating means of replacing hose and hose clamps may also, as previously mentioned be used in a number of ways. Use as a pipe port and as a quick connector sealing means have been previously mentioned.

Referring again to Figure 1, the sealing device when used as a pipe end as a quick connector may easily be seen if one considers just the right half of the union 20 and pipe portion 12.

Housing 22 has an apertured end closure 34 which retains all of the internal parts and may be formed inwardly after the internal parts are inserted into the housing or the housing may be formed to accept another closing means, such as a snap ring, that provides a surface for guide ring 24 to act against.

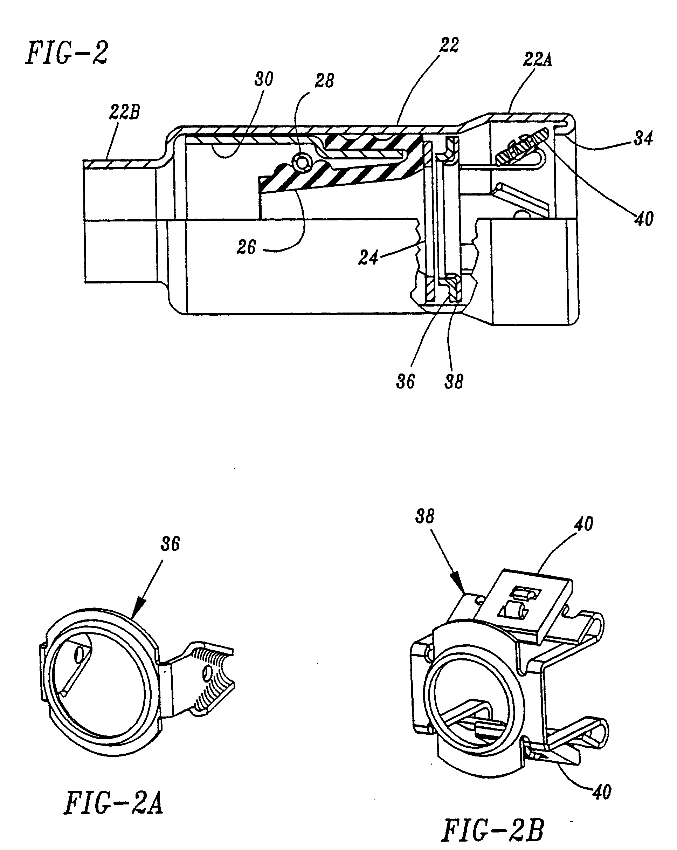

In the case of a quick connector, means for retaining the nipple on pipe portion 12 in the interior of the port are required. This would employ the hose stop bead 32 on pipe portion 12 for a retainer to act against so that pull out forces are transferred to some housing abutting surface that may be similar to the end closure 34. End closure 34 of Figure 1 may be functionally replaced by some other means, such as a snap in device. Figures 2, 2A and 2B show one such embodiment.

Referring to Figures 2, 2A and 2B the seal 26 and other internal parts are shown in a housing 22 and 22A which has been adapted to receive element 36 (Figure 2A) which acts to hold guide-retainer ring 24 and a snap lock retainer 38,40 for a beaded pipe portion as shown in Figure 1 as 12 with bead 32. This retainer 38,40 has flexing means 38 separated from compression members 40. The compression members 40 are separate parts mounted on the flexing means 38 and are of much heavier material in order to provide high pull-out strength once pipe portion 12 is installed.

The concept disclosed herein modifies the sealing means to provide a wide range of accommodation for mis-alignment of pipes. Figure 2 is thus a combination of the seal and retainer guide ring in Figure 1, the element 36 for retaining the seal and guide ring in the housing and the retaining means 38,40 for the pipe portion shown in Figure 2B.

Thus the sealing arrangement which is one end of union 20 in Figure 1 may be used with a separate retaining means 38-40 for pipe portion 12 of Figure 1, as shown in Figure 2.

It is also to be noted that the union 20 of Figure 1 does not have to be the same size (diameter) at both ends, nor does that pipe 22B leading from housing 22 in Figure 2 have to be the same size as the pipe end that plugs into the connection of Figure 2.

The holes shown in the arms of element 36 in Figure 2A are for the purpose of removing element 36 from housing portion 22A in cases where it is necessary to replace an internal component. It is also to be noted that there may arise situations where housing portion 22A may be a separate piece that slips over housing 22, or one may want to combine a check valve in portion 22B.

## Claims

1. A sealing device for a pressure-confining piping system and which may be used when pipe ends are non-aligned and/or at different separations, said sealing device comprising a housing (22) providing a bore, a ring (24) within said housing and having an outer diameter less than the diameter of said bore, a U-shaped cup-type seal (26) wholly within said housing, the seal having first and second legs with a flexing portion between the legs, one leg being longer than the other leg and said first leg being larger in diameter than the second leg, said first leg being in sealing engagement with the housing, and means (30) within the housing to engage the first leg to position the seal therein: characterised
in that said second leg is adapted to receive a pipe end (12,14) and is easily distortable to conform to the surface of the pipe when the pipe end enters the seal at an angle to the longitudinal axis of the housing greater than zero;
in that the ring (24) supports the flexing portion of the seal (26);
in that the ring (24) is free to move transversely within the housing relative to said longitudinal axis when engaged by a pipe end entering said second leg;
in that the ring provides a guide to be engaged by a pipe end entering the seal; and
in that an end closure (34) is provided on the housing to retain the ring and the seal within the housing while permitting said ring to move transversely within the housing relative to said longitudinal axis, the ring being interposed between said flexing portion and said end closure.

2. A sealing device according to Claim 1 characterised in that spring means (28) is associated with said second leg to assist sealing between said second leg and a pipe end (12,14) inserted therein.

3. A sealing device according to Claim 2 characterised in that said spring means is a garter spring (28) surrounding said second leg.

4. A sealing device according to any preceding claim characterised in that said ring (24) has a tapered portion which provides a guide for a pipe end (12,14) entering said second leg.

5. A sealing device according to any preceding claim characterised by the provision of retaining means (38,40) to engage an external bead (32) on a pipe end (12) to retain said pipe end in said second leg.

6. A sealing device according to any of Claims 1 to 5 characterised in that it forms part of a union (20) for connecting more than one pipe end (12,14).

7. A sealing device according to Claim 5 forming part of a coupling device for coupling a pipe end (12) inserted into the seal (26) to another pipe (22B).

8. A sealing device according to Claim 5 when inserted into a port in a coupling device having more than one port.

9. A sealing device according to any of Claims 1 to 5 when inserted into a port in a coupling device having more than one port.

## Patentansprüche

1. Dichtungsvorrichtung für eine unter Druck stehende Leitung, die zur Verwendung bei fluchtenden und/oder in mehreren Richtungen voneinander versetzten Rohrenden, welche ein Gehäuse (22), in dem eine Bohrung vorgesehen ist, einen Ring (24) im genannten Gehäuse, dessen Außendurchmesser kleiner ist als der Durchmesser der genannten Bohrung, eine U-förmige Dichtmanschette (26), die vollständig im Gehäuse untergebracht ist, welche erste und zweite Schenkel aufweist, zwischen denen sich ein Verformungsbereich befindet und bei der einer der Schenkel länger als der andere Schenkel ist, und der erste Schenkel einen größeren Durchmesser aufweist als der zweite Schenkel, und der erste Schenkel abdichtend am Gehäuse anliegt sowie Mittel (30) zur Positionierung der Dichtmanschette innerhalb des Gehäuses, die mit dem ersten Schenkel zusammenwirken, umfaßt.
dadurch gekennzeichnet,
daß der zweite Schenkel so ausgeführt ist, daß er ein Rohrende (12, 14) aufnimmt und leicht verformbar ist, um sich der Oberfläche des Rohres anzupassen, wenn das Rohrende in die Dichtung unter einem Winkel zur Längsachse des Gehäuses eingeführt ist, der größer als Null ist;
daß der Ring (24) den Verformungsbereich der Dichtmanschette (26) unterstützt;
daß der Ring (24) quer zur genannten Längsachse innerhalb des Gehäuses frei beweglich ist, wenn von einem Rohrende beaufschlagt, das in den genannten zweiten Schenkel eingeführt ist;
daß der Ring eine Führung für ein Rohrende darstellt, das in die Dichtung eingeführt wird; und
daß ein Endverschluß (34) am Gehäuse vorgesehen ist, um den Ring und die Dichtung im Gehäuse zu halten, es dem Ring erlaubt, sich quer zur genannten Längsachse innerhalb des Gehäuses zu bewegen, wobei der Ring zwischen dem genannten Verformungsbereich und dem genannten Endverschluß angeordnet ist.

2. Dichtungsvorrichtung nach Anspruch 1,
dadurch gekennzeichnet,
daß Federmittel (28) mit dem genannten zweiten Schenkel zur Unterstützung der Abdichtung zwischen dem zweiten Schenkel und einem darin eingeführten Rohrende (12, 14) verbunden sind.

3. Dichtungsvorrichtung nach Anspruch 2,
dadurch gekennzeichnet,
daß die genannten Federmittel durch eine in sich geschlossene Schraubenfeder (28) dargestellt sind, die den genannten zweiten Schenkel umgibt.

4. Dichtungsvorrichtung nach einem der vorhergehenden Ansprüche,
dadurch gekennzeichnet,
daß der genannte Ring (24) einen sich verjüngenden Teilabschnitt aufweist, der eine Führung für ein Rohrende (12, 14) bereitstellt, das in den genannten zweiten Schenkel eingeführt wird.

5. Dichtungsvorrichtung nach einem der vorhergehenden Ansprüche,
dadurch gekennzeichnet,
daß Haltemittel (38, 40) vorgesehen sind, um an einem äußeren Wulst (32) auf einem Rohrende (12) anzugreifen, um das genannte Rohrende an dem genannten zweiten Schenkel festzulegen.

6. Dichtungsvorrichtung nach einem der Ansprüche 1 bis 5,
dadurch gekennzeichnet,
daß sie Teil einer Einheit (20) bildet, die zum Anschluß von mehr als einem Rohrende (12, 14) dient.

7. Dichtungsvorrichtung nach Anspruch 5, die Teil einer Kupplung ist, die zur Ankupplung eines in die Dichtung (26) eingeführten Rohrendes (12) an ein anderes Rohrende (22B) dient.

8. Dichtungsvorrichtung nach Anspruch 5,
dadurch gekennzeichnet,
daß sie in eine Öffnung einer Kupplungsvorrichtung mit mehr als einer Öffnung eingesetzt ist.

9. Dichtungsvorrichtung nach einem der Ansprüche 1 bis 5,
dadurch gekennzeichnet,
daß sie in eine Öffnung einer Kupplungsvorrichtung mit mehr als einer Öffnung eingesetzt ist.

## Revendications

1. Dispositif d'étanchéité destiné à un ensemble de conduit de retenue de pression et qui peut être utilisé lorsque les extrémités de conduit ne sont pas alignées et/ou ont des séparations différentes, le dispositif d'étanchéité comprenant un boîtier (22) formant un trou, un anneau (24) placé dans le boîtier et ayant un diamètre externe inférieur à celui du trou, un joint d'étanchéité (26) en U en forme de cuvette, entièrement placé dans le boîtier, le joint d'étanchéité ayant une première et une seconde branche comprenant une partie de flexion entre les branches, une première branche étant plus longue que l'autre et la première branche ayant un diamètre supérieur à la seconde branche, la première branche coopérant de façon étanche avec le boîtier, et un dispositif (30) placé dans le boîtier et destiné à coopérer avec la première branche afin qu'il positionne le joint d'étanchéité à l'intérieur, caractérisé en ce que :
la seconde branche est destinée à loger une extrémité (12, 14) et peut être facilement déformée afin qu'elle corresponde à la surface du conduit lorsque l'extrémité du conduit pénètre dans le joint d'étanchéité en formant un angle supérieur à une valeur nulle avec l'axe longitudinal du boîtier,
l'anneau (24) supporte la partie de flexion du joint d'étanchéité (26),
l'anneau (24) est libre de se déplacer transversalement dans le boîtier par rapport à l'axe longitudinal lorsqu'il est en coopération avec une extrémité de conduit pénétrant dans la seconde branche,
l'anneau forme un guide destiné à coopérer avec une extrémité de conduit pénétrant dans le joint d'étanchéité, et
un organe de fermeture (34) d'extrémité est placé sur le boîtier afin qu'il maintienne l'anneau et le joint d'étanchéité dans le boîtier tout en permettant un déplacement transversal de l'anneau à l'intérieur du boîtier par rapport à l'axe longitudinal, l'anneau étant placé entre la partie de flexion et l'organe de fermeture d'extrémité.

2. Dispositif d'étanchéité selon la revendication 1, caractérisé en ce qu'un dispositif à ressort (28) est associé à la seconde branche pour faciliter la coopération étanche entre la seconde branche et une extrémité de conduit (12, 14) qui est introduite dans celle-ci.

3. Dispositif d'étanchéité selon la revendication 2, caractérisé en ce que le dispositif à ressort est un ressort circulaire (28) entourant la seconde branche.

4. Dispositif d'étanchéité selon l'une quelconque des revendications précédentes, caractérisé en ce que l'anneau (24) a une partie tronconique qui forme un guide pour une extrémité de conduit (12, 14) qui pénètre dans la seconde branche.

5. Dispositif d'étanchéité selon l'une quelconque des revendications précédentes, caractérisé par un dispositif (38, 40) de retenue destiné à coopérer avec un cordon extérieur (32) d'une extrémité de conduit (12) afin que l'extrémité du conduit soit retenue dans la seconde branche.

6. Dispositif d'étanchéité selon l'une quelconque des revendications 1 à 5, caractérisé en ce qu'il fait partie d'un manchon de raccordement (20) destiné à raccorder plusieurs extrémités de conduit (12, 14).

7. Dispositif d'étanchéité selon la revendication 5, faisant partie d'un dispositif d'accouplement d'une extrémité (12) de conduit introduite dans le joint d'étanchéité (26) vers un autre conduit (22B).

8. Dispositif d'étanchéité selon la revendication 5, introduit dans un orifice d'un dispositif d'accouplement ayant plusieurs orifices.

9. Dispositif d'étanchéité selon l'une quelconque des revendications 1 à 5, introduit dans un orifice d'un dispositif d'accouplement comprenant plusieurs orifices.
